# EUROPEAN PATENT APPLICATION

(11) **EP 1 631 097 A2**
(43) Date of publication of application: **01.03.2006**
(21) Application number: 05025713.8
(22) Date of filing: 19.03.2001
(51) Int. Cl.: H04Q 7/32

(54) **Installation system and method for cellular terminal separation type satellite communication portable terminal**

(30) Priority: 21.03.2000 JP 2000083203
(62) Divisional of application: 01912494.0
(71) Applicant: NEC Corporation, Minato-ku Tokyo (JP)
(72) Inventor: Soejima, Masakazu, Minato-ku, Tokyo (JP); Handa, Kazunori, Minato-ku, Tokyo (JP); Fujimoto, Yoshinori, Minato-ku, Tokyo (JP); Nakata, Hiroya, Minato-ku, Tokyo (JP); Yoshida, Kyoko, Minato-ku, Tokyo (JP)
(74) Representative: Baronetzky, Klaus

(57) **Abstract**

An installation system for a cellular terminal separation type satellite communication portable terminal which includes a ground cellular terminal (11) capable of stand-alone communication, and a satellite communication portable terminal (12) that accommodates a ground cellular terminal, is electrically connected with the ground cellular terminal via a specified connector, and can communicate with a satellite under the control of the ground cellular terminal, includes a fixing unit (25) that is fixed to a location least affected by radio wave transmission troubles and has a separated satellite communication portable terminal installed therein, and with connection units (14, 14b, 24a, 24b, 28) for permitting communications via a satellite by extending the span of the specified connector to electrically connect the separated satellite communication portable terminal with the separated ground cellular terminal.

## Description

### Technical Field

The present invention relates to a cellular terminal separation type satellite communication portable terminal and, more particularly, to an installation system and method for a cellular terminal separation type satellite communication portable terminal, which facilitate communication within buildings and vehicles.

### Background Art

As disclosed in Japanese Patent Laid-Open No. 10-126839, satellite communication portable terminals, satellite portable telephones in particular, have noticeably widespread, and their operation areas are gradually expanding worldwide.

Some of these satellite communication portable terminals include a type (single mode) that can perform only communication via a satellite, and a type called a dual mode (satellite + ground cellular terminal) or triple mode (satellite + two types of ground cellular terminals) that can receive services for ground cellular terminals as well.

Terminals of the latter type serving also as ground cellular terminals can be classified into the following two types A and B from the viewpoint of physical form:
(A) a terminal with a ground cellular terminal communication function (satellite/cellular terminal hybrid), and
(B) a terminal that allows a ground cellular terminal to be separated from a satellite unit and performs communication via a satellite upon fitting the satellite unit to the ground cellular terminal (also called a Clip-on Type or Piggy-back Type).

In this case, the ground cellular (to be simply referred to cellular hereinafter) terminal is a portable communication terminal that can perform stand-alone communication and communicates signals without the mediacy of a satellite. The satellite unit is a unit mainly including a satellite antenna, an RF (Radio Frequency) device such as an amplifier (including a baseband unit in some case). The above cellular terminal is fitted to this unit to be housed.

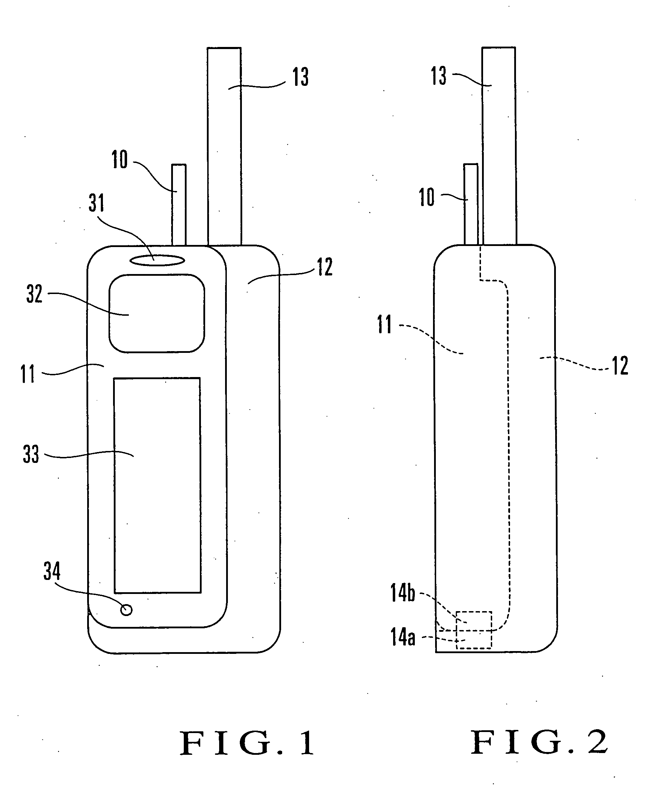

As shown in Fig. 1, a general cellular terminal separation type satellite communication portable terminal is a type that is roughly constituted by a cellular terminal 11 and satellite unit 12 and allows the cellular terminal 11 to be fitted to the satellite unit 12 in performing communication via a satellite. When communication via a satellite is not performed, the cellular terminal 11 is separated from the satellite unit 12, and the cellular terminal 11 can be used alone.

The cellular terminal 11 is comprised of an antenna 10, receiver unit 41, liquid crystal display unit 42, key operation unit 43, transmitter unit 44, and the like. As described above, this terminal is a portable communication terminal that communicates signals without the mediacy of a satellite, i.e., communicates signals via a base station in a cell.

The satellite unit 12 is a unit mainly including a satellite antenna 13 and an RF device such as an amplifier (including a baseband unit in some case). This unit performs communication via a satellite by using the functions of the cellular terminal 11, e.g., the receiver unit 41, liquid crystal display unit 42, key operation unit 43, transmitter unit 44, and the like.

As shown in Fig. 2, the cellular terminal 11 allows the satellite unit 12 to be fitted thereon. The satellite unit 12 has a system connector 14a. The cellular terminal 11 has a system connector 14b.

In communication via a satellite, the satellite unit 12 is fitted on the cellular terminal 11, and the system connector 14a of the satellite unit 12 is directly connected to the system connector 14b of the cellular terminal 11.

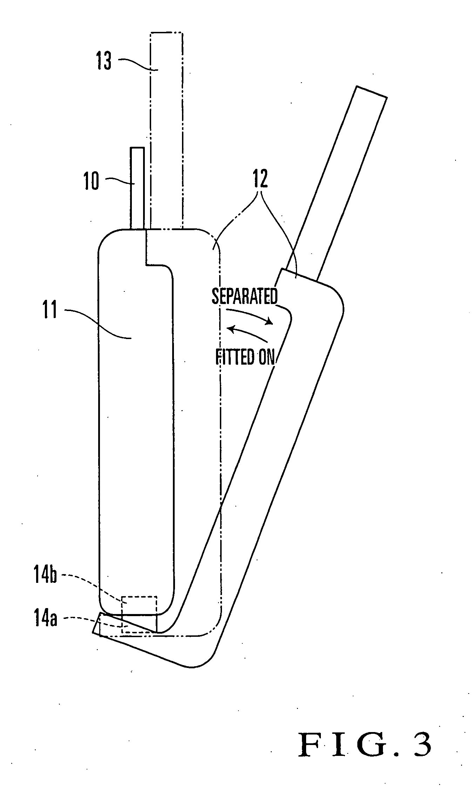

The cellular terminal 11 is separated/fitted from/on the satellite unit 12. As shown in Fig. 3, the cellular terminal 11 and satellite unit 12 can be separated from each other. When communication via a satellite is not performed, the satellite unit 12 and cellular terminal 11 are separated from each other to disconnect the system connector 14a of the satellite unit 12 from the system connector 14b of the cellular terminal 11. In this case, the cellular terminal 11 can be used alone.

When communication via a satellite is performed, they cannot be used in a separated state. If they are separated from each other, the satellite unit 12 must be fitted on the cellular terminal 11.

In performing transmission via a satellite, speech or data input from the cellular terminal 11 is transmitted to the satellite unit 12 via the system connector 14b and system connector 14a under the control of the cellular terminal 11. Finally, the speech or data is transmitted as a speech or data signal from the satellite antenna 13.

In performing reception via a satellite, the above procedure is reversed. The speech or data signal received by the satellite antenna 13 is sent to the satellite unit 12. This signal is then output as speech or data from the cellular terminal 11 via the system connector 14a and system connector 14b.

In the cellular terminal separation type satellite communication portable terminal, however, in performing transmission/reception via a satellite, regardless of whether the terminal can also be used as a ground cellular terminal, a large radio wave transmission attenuation occurs due to the frequency used and the length of a transmission path to a satellite, which is a problem unique to satellite communication. In general, therefore, the margin of the overall system with respect to radio wave transmission attenuation is smaller than that of a cellular.

In other words, the indoor quality of transmission/reception via a satellite, e.g., in buildings, vehicles, trains, ships, and airplanes, is much poorer than that with a cellular. For this reason, a satellite communication terminal is required to perform transmission/reception in an outdoor place where a satellite can be directly seen or a similar environment, e.g., a place near a window, where radio wave transmission troubles are minimum between the satellite and the terminal.

In such a conventional cellular terminal separation type satellite communication portable terminal, regardless of whether the terminal is of the A or B type, a user must move to a place where radio wave transmission troubles are relatively small, e.g., the outdoors or a place near a window, together with the cellular terminal separation type satellite communication portable terminal in order to perform communication via a satellite. This movement is required because of the unique problem described above, and is very cumbersome. This imposes restrictions on the use of the cellular terminal separation type satellite communication portable terminal.

A special antenna may be provided for the cellular terminal separation type satellite communication portable terminal. This special antenna may be placed in a place near a window inside a building, vehicle, train, ship, or airplane, and signals transmitted via a satellite may be received inside via the special antenna.

However, the above cellular terminal separation type satellite communication portable terminal already has the satellite antenna 13 as shown in Figs. 1 to 3, and hence two types of antenna, i.e., indoor and outdoor antennas, are used, resulting in an increase in cost.

### Disclosure of Invention

It is an object of the present invention to solve the above problems and provide an improved installation system, method, and the like for a cellular terminal separation type satellite communication portable terminal.

For example, it is the first object of the present invention to provide an installation system, method, and the like for a cellular terminal separation type satellite communication portable terminal, which make it unnecessary for a user to move to the outdoors, a window, or the like, together with a terminal, in performing communication via a satellite, thereby increasing the degree of freedom of communication.

It is the second object of the present invention to provide an installation system, method, and the like for a cellular terminal separation type satellite communication portable terminal, which increase the degree of freedom of communication at a low cost by using a fixing unit having a very simple arrangement.

It is the third object of the present invention to provided an installation system, method, and the like for a cellular terminal separation type satellite communication portable terminal, which can always keep the installation direction of an antenna of a satellite communication portable terminal to a predetermined direction, and can always keep communication quality constant.

It is the fourth object of the present invention to provided an installation system, method, and the like for a cellular terminal separation type satellite communication portable terminal, which can transmit speech and data signals from a ground cellular terminal to a separated satellite communication portable terminal by connecting the satellite communication portable terminal to the ground cellular terminal via a cable or the like.

It is the fifth object of the present invention to provided an installation system, method, and the like for a cellular terminal separation type satellite communication portable terminal, which allows a separated ground cellular terminal to use a commercially available desk kit inside a building or a moving body kit, and allows the ground cellular terminal to be used as a simple desk-stand telephone or mobile telephone in performing communication via a satellite.

According to the present invention, there is provided the first installation system for a cellular terminal separation type satellite communication portable terminal constituted by a ground cellular terminal capable of stand-alone communication and a satellite communication portable terminal which accommodates the ground cellular terminal, is electrically connected to the ground cellular terminal via predetermined connectors, and can communicate with a satellite under the control of the ground cellular terminal, comprising a fixing unit which is fixed to a place where radio wave transmission troubles are small and on which the separated satellite communication portable terminal is installed, and a connection unit which serves as an extension between the predetermined connectors and electrically connects the separated satellite communication portable terminal to the other separated ground cellular terminal so as to perform communication via a satellite.

According to the present invention, there is provided the second installation system for a cellular terminal separation type satellite communication portable terminal constituted by a ground cellular terminal capable of stand-alone communication and a satellite communication portable terminal which can be separated/fitted from/on the ground cellular terminal, comprising a fixing unit which is fixed to a fixed object in a place where radio wave transmission troubles are small and holds the separated satellite communication portable terminal, and means for electrically connecting the separated satellite communication portable terminal to the other separated ground cellular terminal.

According to the present invention, there is provided the third installation system for a cellular terminal separation type satellite communication portable terminal constituted by a ground cellular terminal capable of stand-alone communication and a satellite communication portable terminal which can be separated/fitted from/on the ground cellular terminal, comprising a fixing unit which is fixed to a fixed object in a place where radio wave transmission troubles are small and on which the separated satellite communication portable terminal is installed, and means for electrically connecting the separated satellite communication portable terminal to the other separated ground cellular terminal.

According to the present invention, there is provided the first installation method for a cellular terminal separation type satellite communication portable terminal constituted by a ground cellular terminal capable of stand-alone communication and a satellite communication portable terminal which accommodates the ground cellular terminal, is electrically connected to the ground cellular terminal via predetermined connectors, and can communicate with a satellite under the control of the ground cellular terminal, comprising the step of installing the separated satellite communication portable terminal in a place where radio wave transmission troubles are small, and the step of providing an extension between the predetermined connectors and electrically connecting the separated satellite communication portable terminal to the other separated ground cellular terminal so as to perform communication via a satellite.

According to the present invention, there is provided the second.installation method for a cellular terminal separation type satellite communication portable terminal constituted by a ground cellular terminal capable of stand-alone communication and a satellite communication portable terminal which can be separated/fitted from/on the ground cellular terminal, comprising the step of installing the separated satellite communication portable terminal in a place where radio wave transmission troubles are small, and the step of electrically connecting the separated satellite communication portable terminal to the other separated ground cellular terminal.

According to the present invention, there is provided the third installation method for a cellular terminal separation type satellite communication portable terminal constituted by a ground cellular terminal capable of stand-alone communication and a satellite communication portable terminal which can be separated/fitted from/on the ground cellular terminal, comprising the step of fixing the separated satellite communication portable terminal to a window glass, and the step of electrically connecting the separated satellite communication portable terminal to the other separated ground cellular terminal.

According to the present invention, there is provided the first method of using a cellular terminal separation type satellite communication portable terminal constituted by a ground cellular terminal capable of stand-alone communication and a satellite communication portable terminal which can be separated/fitted from/on the ground cellular terminal, comprising the step of installing or holding the separated satellite communication portable terminal in a place where radio wave transmission troubles are small, and the step of electrically connecting the separated satellite communication portable terminal to the other separated ground cellular terminal.

### Brief Description of Drawings

Fig. 1 is a front view showing the schematic arrangement of a general cellular terminal separation type satellite communication portable terminal;
Fig. 2 is a side view showing a state where a satellite unit is fitted on a cellular terminal in the cellular terminal separation type satellite communication portable terminal;
Fig. 3 is a side view showing the operation of separating and fitting the cellular terminal from/in the satellite unit in Fig. 2;
Fig. 4 is a view showing the schematic arrangement of an installation system for a cellular terminal separation type satellite communication portable terminal according to the present invention;
Fig. 5 is a block diagram showing the schematic circuit arrangement of the cellular terminal and satellite unit in Fig. 4;
Fig. 6 is a view showing a modification of a fixing unit in Fig. 4;
Fig. 7 is a view showing an example of how the satellite unit and fixing unit are installed inside a building;
Fig. 8 is a view showing a modification of the arrangement in Fig. 7;
Fig. 9 is a view showing a modification of the arrangement in Fig. 7, in which the satellite unit and fixing unit are installed outside a building;
Fig. 10 is a view showing an example of how the satellite unit and fixing unit are installed inside a vehicle;
Fig. 11 is a view showing a modification of the arrangement in Fig. 10, in which the satellite unit and fixing unit are installed at a front portion of the vehicle;
Fig. 12 is a view showing a modification of the arrangement in Fig. 10, in which the satellite unit and fixing unit are installed at a rear portion of the vehicle;
Fig. 13 is a view showing a modification of the arrangement in Fig. 10, in which the satellite unit and fixing unit are installed at a sun roof portion of the vehicle;
Fig. 14 is a view showing a modification of the arrangement in Fig. 13, in which the satellite unit and fixing unit are installed at a sun roof portion of the vehicle;
Fig. 15 is a view showing a modification of the arrangement in Fig. 6;
Fig. 16 is a view showing how the fixing unit in Fig. 15 is attached to a window of the vehicle;
Fig. 17 is a view showing how the satellite unit is fitted on the fixing unit in Fig. 16;
Fig. 18 is a view showing an arrangement of fixing units at a plurality of positions in the vehicle;
Fig. 19 is a sectional view showing a modification of the fixing unit in Fig. 6;
Fig. 20 is a sectional view showing a modification of the fixing unit in Fig. 6;
Fig. 21 is a sectional view showing a modification of the fixing unit in Fig. 20;
Fig. 22 is a view showing a modification of the arrangement in Fig. 4, in which the cellular terminal communicates with the satellite unit by radio;
Fig. 23 is a block diagram showing the schematic circuit arrangement of the cellular terminal and satellite unit in Fig. 22;
Fig. 24 is a view showing a modification of the arrangement in Fig. 23;
Fig. 25 is a side sectional view showing a fixing method using a double-sided suction cup type fixing unit (fixing member);
Fig. 26 is a side sectional view showing another fixing method using the double-sided suction cup type fixing unit (fixing member);
Fig. 27 is a side sectional view showing a fixing method using a suction cup/projection type fixing unit (fixing member); and
Fig. 28 is a front view showing the satellite unit having a fitting hole inside.

### Best Mode of Carrying Out the Invention

An embodiment of the present invention will be described below with reference to the accompanying drawings.

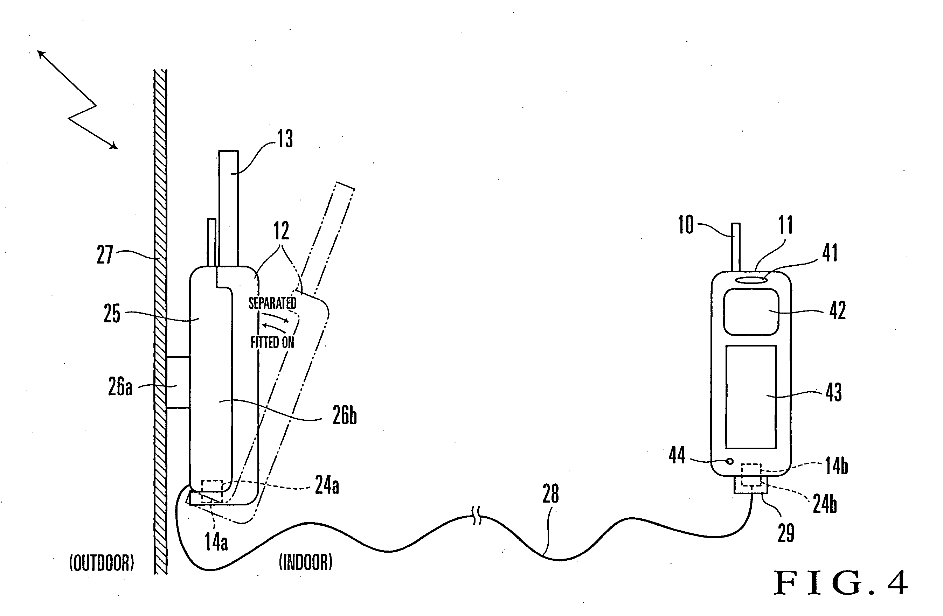

Fig. 4 is a view showing the schematic arrangement of an installation system for a cellular terminal separation type satellite communication portable terminal according to the present invention.

The cellular terminal separation type satellite communication portable terminal is of a type that allows a cellular terminal 11 capable of stand-alone communication to be separated from a satellite unit 12 in which the cellular terminal 11 is fitted/housed. When communication is to be performed via a satellite as well, the cellular terminal 11 and satellite unit 12 of the cellular terminal separation type satellite communication portable terminal are separated from each other, as shown in Fig. 4. In this state, communication is performed under the control of the cellular terminal 11. This makes it possible to make the cellular terminal separation type satellite communication portable terminal free from its unique problem, i.e., the restriction due to radio wave transmission troubles.

The installation system for the cellular terminal separation type satellite communication portable terminal includes a fixing unit 25. The fixing unit 25 has a fixing portion 26a and fitting portion 26b. The fixing portion 26a of the fixing unit 25 is fixed at a portion near a window glass inside a building or of a moving object such as a vehicle, an airplane including a light airplane, a ship including a boat, or a train.

A relatively good radio wave transmission condition is ensured at a window glass 27. The end face of the fixing portion 26a is formed by a suction cup, double-sided adhesive tape, or the like, and the fixing portion 26a is made to adhere to the window glass 27 by suction or fixed thereto with an adhesive in a simple manner.

As shown in Fig. 4, the satellite unit 12 is separated from the cellular terminal separation type satellite communication portable terminal. The satellite unit 12 then serves as a satellite communication portable terminal and fitted on the fitting portion 26b of the fixing unit 25 in place of the cellular terminal 11.

The fixing unit 25 has a system connector 24a. The system connector 24a is directly connected to a system connector 14b of the satellite unit 12 when the satellite unit 12 is fitted on the fixing unit 25.

A cable extension 28 is attached to the fixing unit 25. The cable extension 28 is connected to the system connector 24a. The other end portion of the cable extension 28 has a cable connector 29.

The cable connector 29 has a system connector 24b. The system connector 24b is directly connected to the system connector 14b of the cellular terminal 11.

In this manner, with the fixing unit 25, the satellite unit 12 is fixed at a position where satellite radio wave reception condition is good. This makes it possible to move the cellular terminal 11 and perform communication via a satellite within the length of the cable extension 28. At the time of communication via a satellite, therefore, the user need not move to the outdoors or a window, together with the cellular terminal separation type satellite communication portable terminal. This increases the degree of freedom in indoor communication.

Note that the cellular terminal 11 is a terminal based on the cdmaOne system, which is the digital portable telephone system standardized in the U.S.A., Japan, and the like, the AMPS system, which is the analog portable telephone system standardized in the U.S.A., the GSM system, which is the digital portable telephone system standardized in Europe, or the PDC system, which is the digital portable telephone system standardized in Japan.

The system connector 24a incorporated in the fixing unit 25 basically has the same function as that of the system connector 14b of the cellular terminal 11.

Likewise, the system connector 24b incorporated in the cable connector 29 attached to the cable extension 28 has the same function as that of a system connector 14a incorporated in the satellite unit 12.

More specifically, in transmission via a satellite, speech or data from the cellular terminal 11 propagates through the cable extension 28 via the system connector 14b, system connector 24b, and cable connector 29, and is transmitted to the satellite unit 12 via the system connector 24a in the fixing unit 25 and the system connector 14a. Finally, the speech or data is transmitted as a speech or data signal from a satellite antenna 13.

In reception via a satellite, the above procedure is reversed. The speech or data signal received by the satellite antenna 13 is sent to the satellite unit 12 and propagates through the cable extension 28 via the system connector 14a and the system connector 24a in the fixing unit 25. This signal is further output as speech or data from the cellular terminal 11 via the cable connector 29, system connector 24b, and system connector 14b.

The satellite unit 12 is of a fitting type, and hence can always be attached/detached. When, for example, the user is to go out, he/she detaches the satellite unit 12 from the fixing unit 25 and disconnects the cable connector 29 of the cellular terminal 11. Then, the cellular terminal 11 is fitted in the satellite unit 12 to allow the user to carry the satellite unit 12, as shown in Fig. 2.

In this manner, the cellular terminal 11 and satellite unit 12 are separated from each other to allow the user to use them in communication without the mediacy of a satellite or communication via a satellite inside buildings, vehicles, and the like.

In addition, since the fixing unit 25 has a cable connection point used for supply of power from the cellular terminal 11 or an external source, there is no need to perform cumbersome cable connection in attaching/detaching the satellite unit 12. This makes it easy to use the cellular terminal separation type satellite communication portable terminal.

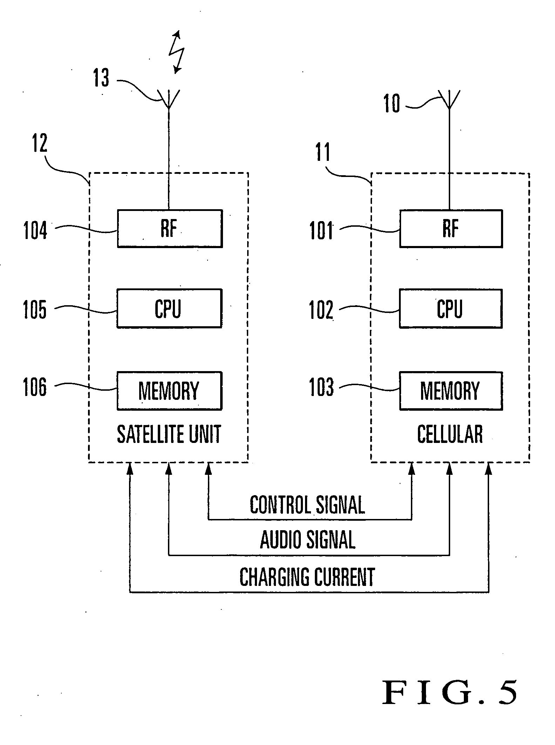

As shown in Fig. 5, the cellular terminal 11 includes, for example, an RF unit 101 for performing radio signal processing, a CPU (Central Processing Unit) 102 for controlling the cellular terminal itself and controlling the satellite unit 12 to communicates with a satellite, and a memory 103 storing at least control programs for controlling the function of the cellular terminal and data.

Likewise, the satellite unit 12 includes an RF section 104 for performing radio signal processing, a CPU 105 for controlling transmission/reception via a satellite, and a memory 106 which stores at least control programs for controlling the function of the satellite unit and data.

Note that the cellular terminal 11 and satellite unit 12 respectively have batteries.

Control signals, audio signals, and charging currents are input/output between the cellular terminal 11 and the satellite unit 12. In addition, image signals and data signals can also be transmitted/received between the cellular terminal 11 and the satellite unit 12, as needed.

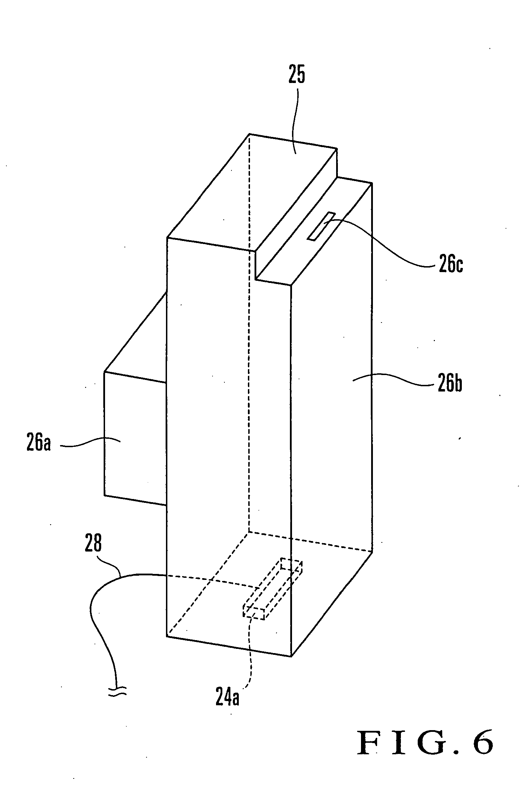

Referring to Fig. 6 showing the schematic arrangement of the fixing unit 25 in Fig. 4, the fitting portion 26b of the fixing unit 25 has the same shape as that of the portion of the cellular terminal 11 which is fitted on the fitting portion 26b. The satellite unit 12 is fitted on the fitting portion 26b.

The fixing portion 26a is formed on the opposite side to the fitting portion 26b. As described above, the fixing portion 26a is made to adhere to the window glass 27 by suction or bonded thereto with an adhesive by using a suction cup, double-sided adhesive tape, or the like, and supports the weight of the satellite unit 12 and the like.

The area of the fixing portion 26a fixed to the window glass 27 is determined by the weight of the satellite unit 12 and the like and suction force or adhesive force.

A lock hole 26c is formed in the fitting portion 26b on the opposite side to the system connector 24a in the fixing unit 25. The lock hole 26c locks the pawl portion (not shown) of the satellite unit 12 to prevent the satellite unit 12 from being unfastened from the fitting portion 26b.

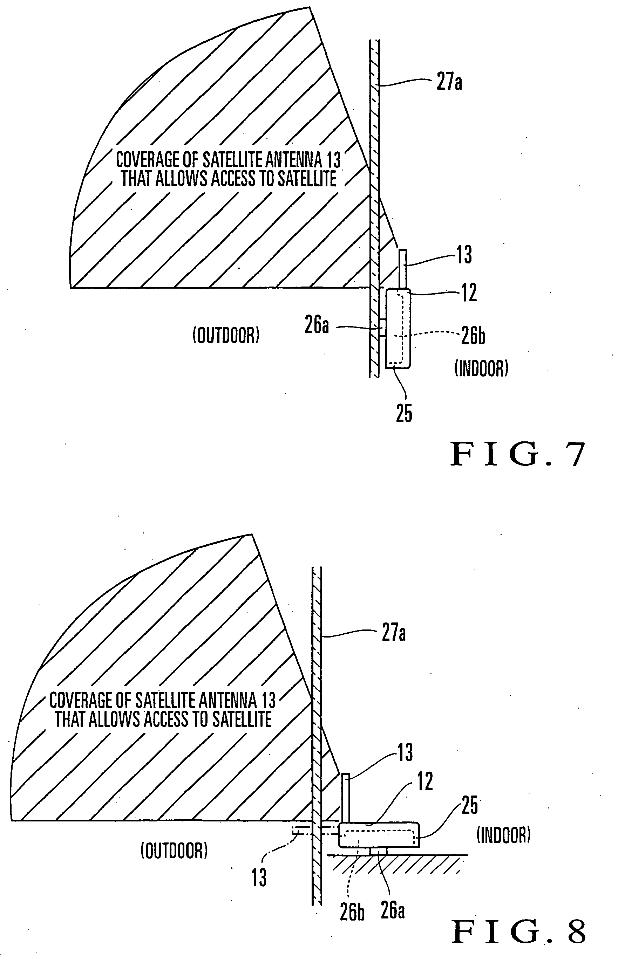

Fig. 7 is a view showing a case where the satellite unit 12 and fixing unit 25 are installed inside a building. As shown in Fig. 7, the fixing unit 25 is fixed to a window glass 27a inside the building or a portion around the window glass 27a, at which a relatively good radio wave transmission condition is ensured, with the fixing portion 26a of the fixing unit 25, and the satellite unit 12 is fitted on the fitting portion 26b of the fixing unit 25.

With this operation, a wide coverage that allows access to a satellite can be ensured for the satellite antenna 13.

The fixing unit 25 on which the satellite unit 12 is fitted can be easily detached from the window glass 27a when the window glass 27a is to be opened/closed. No trouble therefore arises when the window glass 27a is opened/closed.

By attaching the satellite unit 12 and fixing unit 25 at a position near the lowermost portion of the window glass 27a, a wider coverage that allows access to the satellite can be ensured for the satellite antenna 13. The installation direction of the satellite antenna 13 of the satellite unit 12 must always be kept constant. The satellite antenna 13 can always be kept in a predetermined direction by attaching the satellite unit 12 to the fixing unit 25.

Fig. 8 shows a modification of the arrangement in Fig. 7. If a flat portion such as a desk or table exists near the window glass 27a, the fixing portion 26a of the fixing unit 25 may be fixed on the flat portion. In this case, the satellite antenna 13 of the satellite unit 12 fitted on the fitting portion 26b of the fixing unit 25 is set vertical. This operation can be done if the antenna is designed to be pivotal vertically or horizontally.

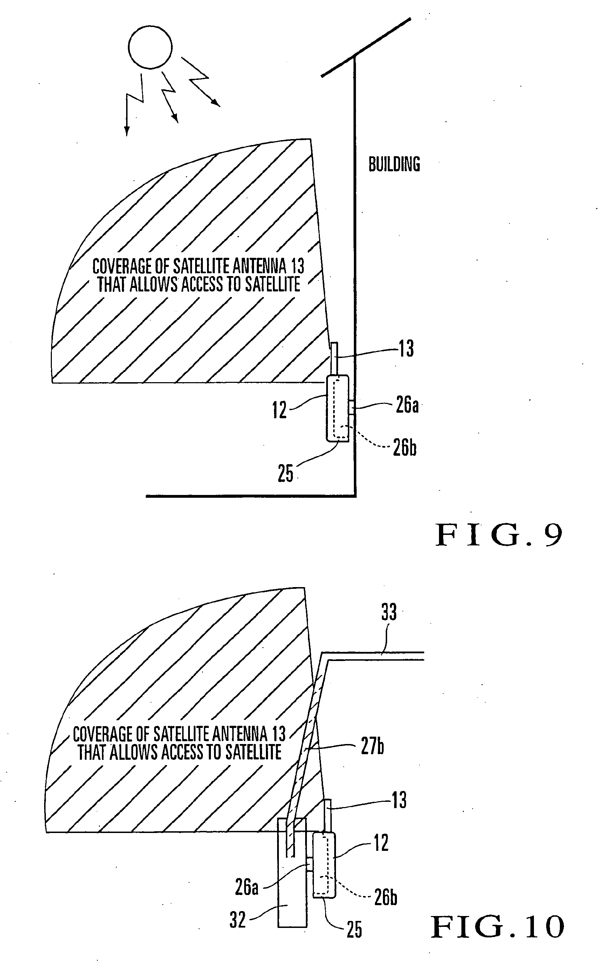

Fig. 9 is a view showing a modification of the arrangement in Fig. 7, in which the satellite unit 12 and fixing unit 25 are installed outdoors. As shown in Fig. 9, the fixing portion 26a of the fixing unit 25 may be fixed to an outer wall of a building.

This further enlarges the coverage of the satellite antenna 13 which allows access to the satellite. According to the present invention, therefore, in the installation system for this cellular terminal separation type satellite communication portable terminal, the user can perform communication while sitting at a desk inside a building. In addition, if a commercially available desk kit for a cellular terminal is used, a simple desk-stand telephone can be obtained.

In addition, since the user can perform communication while holding a meeting at a nearby conference table, this system can also be applied to a telephone conference system.

Fig. 10 is a view showing a case where the satellite unit 12 and fixing unit 25 are installed inside a vehicle. As shown in Fig. 10, the fixing unit 25 is fixed to a window glass 27b of the vehicle or a door 32 near the window glass 27b, at which a relatively good radio wave transmission condition is ensured, with the fixing portion 26a of the fixing unit 25, and the satellite unit 12 is fitted on the fitting portion 26b of the fixing unit 25.

With this operation, a wide coverage that allows access to the satellite can be ensured for the satellite antenna 13.

In addition, since the fixing unit 25 on which the satellite unit 12 is fitted can be easily detached from the window glass 27b as in the case of indoor use, no problem arises when the window glass 27b and door 32 are opened/closed.

Furthermore, by attaching the satellite unit 12 and fixing unit 25 to a portion near the lowermost portion of the window glass 27b, a wider coverage that allows access to the satellite can be ensured, as shown in Fig. 8.

When the satellite unit 12 and fixing unit 25 are attached to a portion near the lowermost portion of the window glass 27b, a wide coverage that allows access to the satellite can be ensured for the satellite antenna 13, as shown in Fig. 10, even in a vehicle as in the case of indoor installation.

Assume that when the fixing unit 25 is detached and moved/fixed to the window glass 27b near the driver's seat, front passenger seat, or rear passenger seat, and the satellite unit 12 is fitted on the moved fixing unit 25, the satellite comes in the shadow of a building, mountain, bridge, or the like around the vehicle. In this case, the use can communicate with the satellite by selecting the fixing unit 25 mounted on the window glass 27b located outside the shadow.

If a commercially available on-vehicle kit for a cellular terminal is used, a simple vehicle telephone can be obtained.

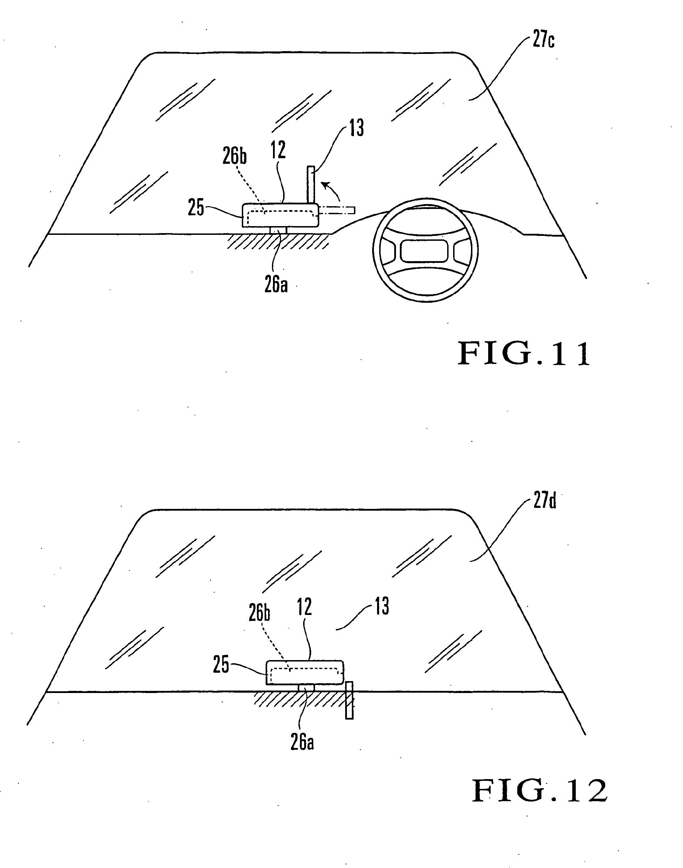

Fig. 11 is a view showing a modification of the arrangement in Fig. 10, in which the satellite unit 12 and fixing unit 25 are installed on a front portion of a vehicle. As shown in Fig. 11, the fixing portion 26a of the fixing unit 25 may be fixed to a flat portion near a front glass 27c of the vehicle. In this case, the satellite antenna 13 of the satellite unit 12 fitted on the fitting portion 26b of the fixing unit 25 pivots to become vertical.

Fig. 12 is a view showing a modification of the arrangement in Fig. 10, in which the satellite unit 12 and fixing unit 25 are installed on a rear portion of the vehicle. As shown in Fig. 12, the fixing portion 26a of the fixing unit 25 my be fixed to a flat portion near a rear glass 27d of the vehicle. In this case, the satellite antenna 13 of the satellite unit 12 fitted on the fitting portion 26b of the fixing unit 25 is set vertical.

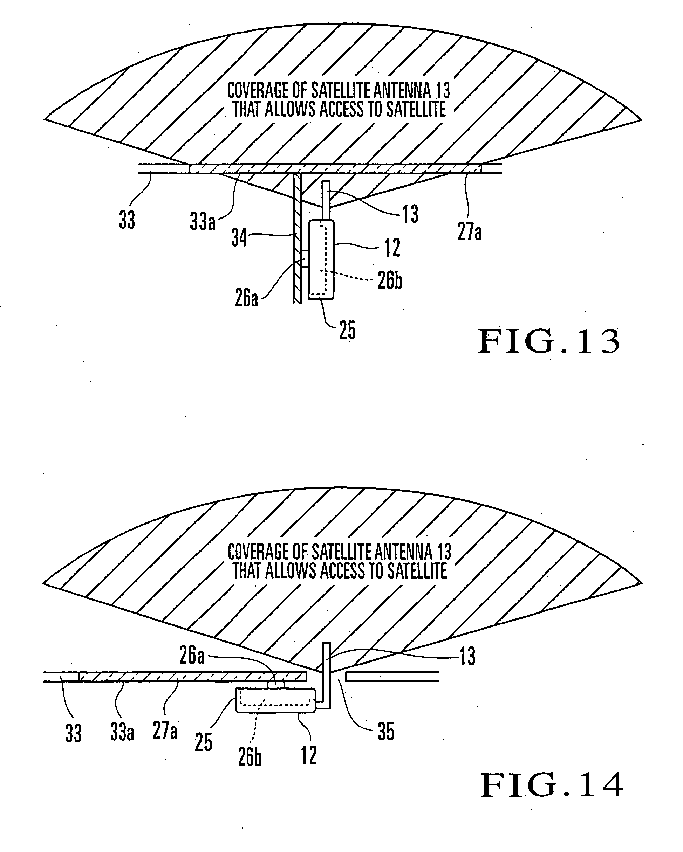

Fig. 13 is a view showing a modification of the arrangement in Fig. 10, in which the satellite unit 12 and fixing unit 25 are installed at a sun roof portion of the vehicle. As shown in Fig. 13, a plate 34 exhibiting a radio wave transmission attenuation may be mounted on a glass 27e of a sun roof or moon roof 33a to be vertical, and the fixing portion 26a of the fixing unit 25 may be fixed to the plate 34.

With this arrangement, the coverage of the satellite antenna 13 which allows access to the satellite is further enlarged.

Fig. 14 is a view showing a modification of the arrangement in Fig. 13, in which the satellite unit 12 and fixing unit 25 are installed at a sun roof portion of the vehicle. As shown in Fig. 14, the fixing portion 26a of the fixing unit 25 may be fixed to the glass 27e of the sun roof or moon roof 33a. In this case, the satellite antenna 13 of the satellite unit 12 fitted on the fitting portion 26b of the fixing unit 25 is set vertical. The vertical satellite antenna 13 protrudes outside from an opening portion 35 of the open sun roof 33a.

With this arrangement, the coverage of the satellite antenna 13 which allows access to the satellite is further enlarged.

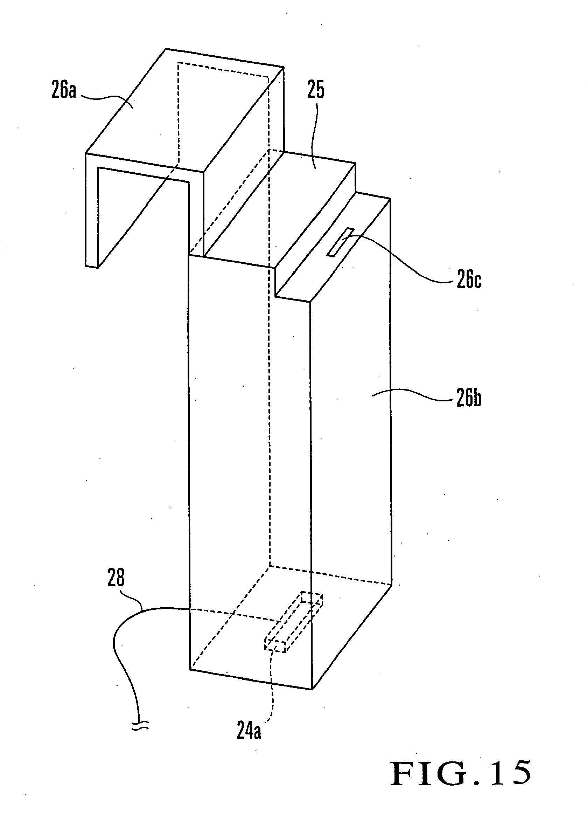

Fig. 15 shows a modification of the fixing unit in Fig. 6. As shown in Fig. 15, the fixing portion 26a of the fixing unit 25 is designed in the form of a drink holder to be hooked in a gap in a window glass housing portion of a vehicle door.

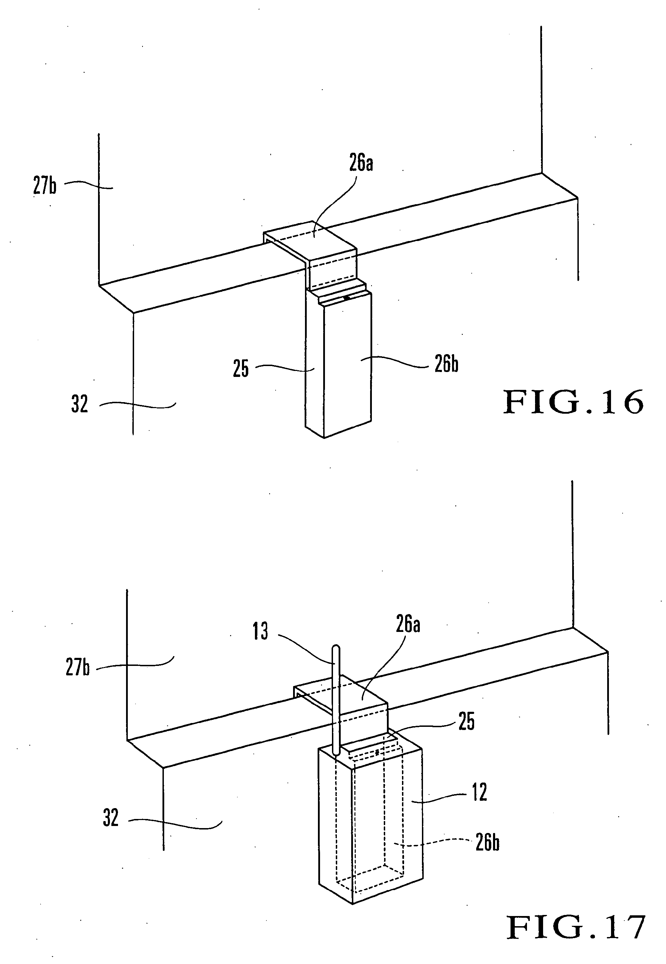

Fig. 16 is a view showing how the fixing unit 25 is attached to a vehicle window. As shown in Fig. 16, the fixing unit 25 can be hooked and fixed in a gap of the window glass housing portion of the window glass 27b of the door 32 at the driver's seat, front passenger seat, or rear passenger seat of the vehicle.

Fig. 17 is a view showing how the satellite unit 12 is fitted on the fixing unit 25 in Fig. 16. As shown in Fig. 17, the satellite unit 12 is fitted on the fitting portion 26b of the fixing unit 25. This eliminates the necessity to detach the fixing unit 25 when the window glass 27b is opened/closed.

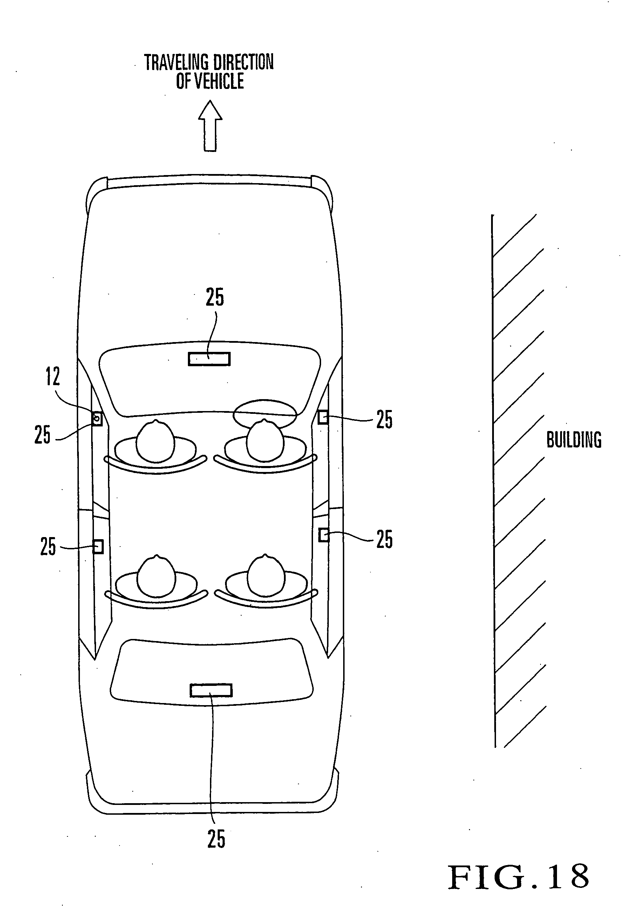

Fig. 18 is a view showing an example of how the fixing units 25 are arranged at a plurality of positions in the vehicle. As shown in Fig. 18, the fixing units 25 can be fixed at the driver's seat, front passenger seat, and the window glass housing portions of the window glasses 27b at the rear passenger seats. The fixing units 25 can also be fixed near the front glass 27c and rear glass 27d.

In a vehicle having a sun roof 33 and moon roof 33a, the fixing units 25 can be fixed near window glasses 27e of the sun roof and moon roof 33a.

According to the present invention, therefore, even if an obstacle such as a building, mountain, or bridge exists around the vehicle, and the vehicle enters the shadow of the obstacle in one direction to result in failure of access to the satellite, access to another satellite can be made by moving the fixing unit 25 in another direction.

The above description has been made on the vehicle. However, the present invention can be equally applied to other moving objects such as ships including yachts and boats, airplanes including light airplanes, and trains.

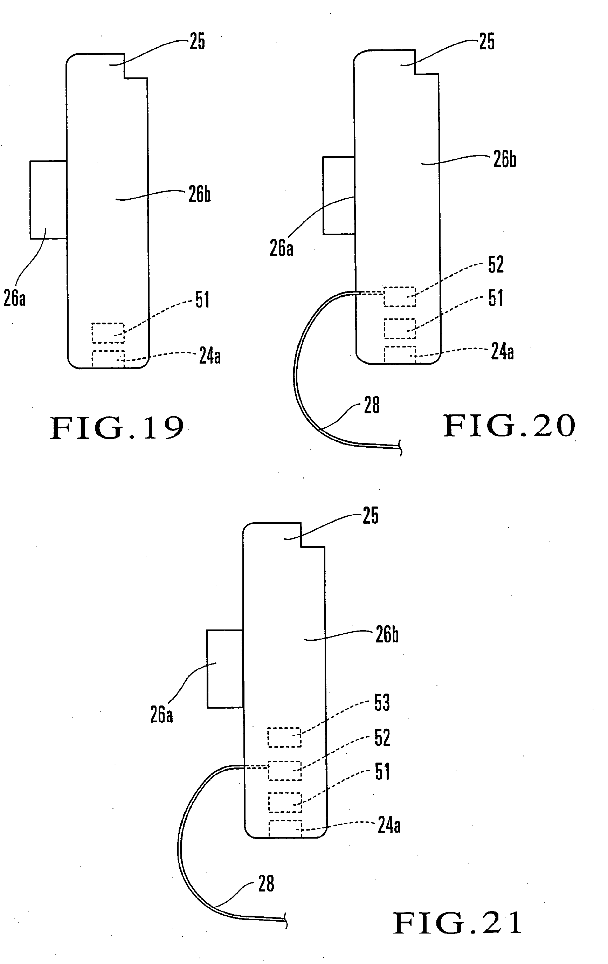

Fig. 19 is a sectional view showing a modification of the fixing unit 25 in Fig. 6. As shown in Fig. 19, a buffer circuit 51 is provided for the fixing unit 25 as needed. The buffer circuit 51 is connected between the system connector 24a and the cable extension 28 (Fig. 4) to correct a signal change due to a cable loss.

If the cable extension 28 needs to be elongated, a signal change due to a cable loss is corrected.

Fig. 20 is a sectional view showing a modification of the fixing unit 25 in Fig. 6. As shown in Fig. 20, a take-up/housing mechanism 52 is provided for the fixing unit 25. The take-up/housing mechanism 52 takes up the cable extension 28 and houses it.

More specifically, when the satellite unit 12 is separated from the fixing unit 25 and fitted on the cellular terminal 11 to be used as a cellular terminal separation type satellite communication portable terminal at the time of going out, the take-up/housing mechanism 52 takes up the cable extension 28 of the fixing unit 25, which is not used, and houses it.

This prevents the cable extension 28 from being pulled and cut through carelessness and becoming useless when many people pass by the cable extension 28, and also prevents the cable extension 28 from being tangled when it is stored away.

Fig. 21 is a sectional view showing a modification of the fixing unit 25 in Fig. 20. As shown in Fig. 21, a charging unit 53 is provided for the fixing unit 25. The charging unit 53 charges the batteries of the satellite unit 12 and cellular terminal 11. The charging unit 53 charges the cellular terminal 11 via the cable extension 28.

This eliminates the chance of battery depletion during operation.

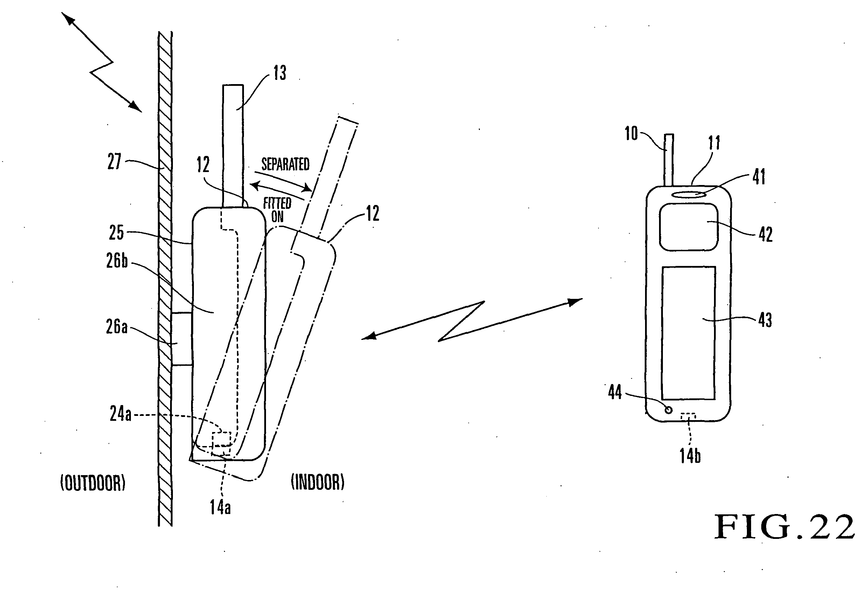

Even if the charging unit 53 is provided for the satellite unit 12, the same effect as that described above can be obtained. Fig. 22 is a view showing a modification of the arrangement in Fig. 4, in which the cellular terminal 11 communicates with the satellite unit by radio. As shown in Fig. 22, as compared with the arrangement in Fig. 4, the cellular terminal 11 is connected to the satellite unit 12 by radio. The cellular terminal 11 communicates with a satellite by radio via the satellite unit 12.

As compared with the arrangement in Fig. 4, the cable extension 28 is not required, and hence need not be routed, thereby further increasing the degree of freedom of the movement of the user.

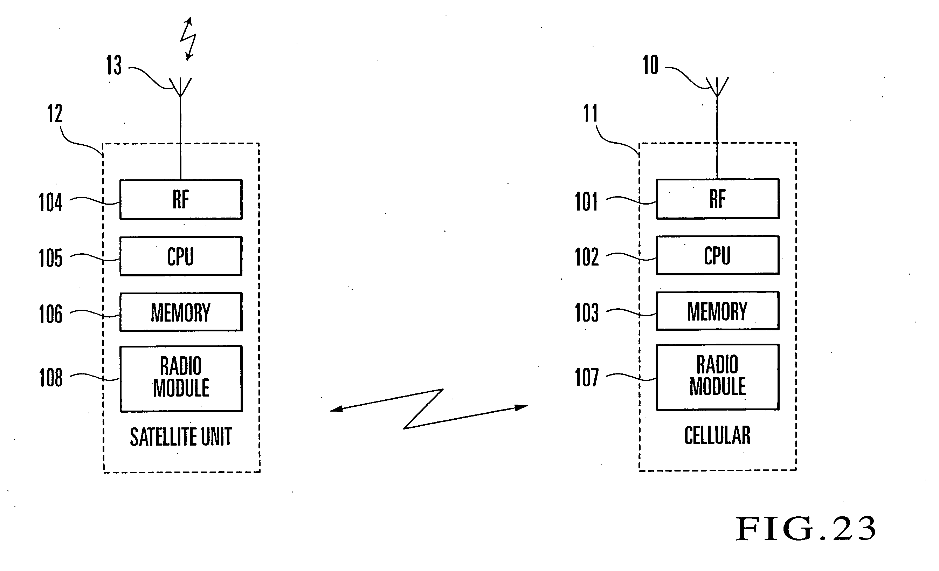

Fig. 23 is a block diagram showing the schematic circuit arrangement of the cellular terminal 11 and satellite unit 12. As shown in Fig. 23, as compared with the arrangement in Fig. 5, the cellular terminal 11 and satellite unit 12 further include radio modules 107 and 108. As the radio modules 107 and 108, for example, modules based on a radio scheme such as Bluetooth for short-distance communication of data and speech are used. The use of this scheme facilitates radio connection.

In communicating with a satellite, the cellular terminal 11 transmits/receives control signals, audio signals, image signals, data signals, and the like to/from the satellite unit 12 by radio via the radio modules 107 and 108.

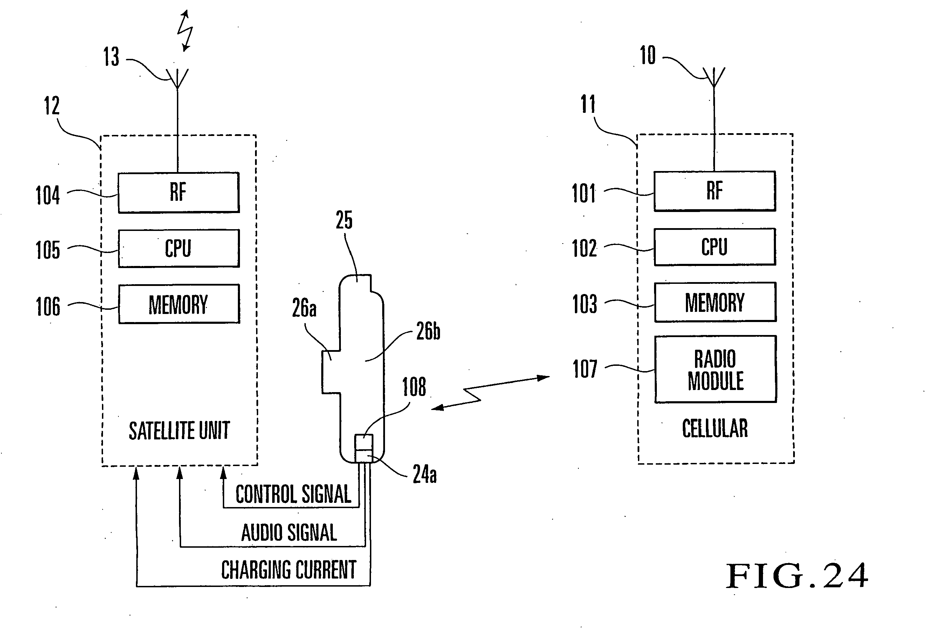

Fig. 24 is a view showing a modification of the arrangement in Fig. 23. As compared with the arrangement in Fig. 23, the radio module 108 of the satellite unit 12 is mounted in the fixing unit 25. In communicating with a satellite, the cellular terminal 11 transmits/receives control signals, audio signals, image signals, data signals, and the like via the radio module 107, the radio module 108 of the fixing unit 25, and the system connectors 24a and 14a. This reduces the load on the satellite unit 12.

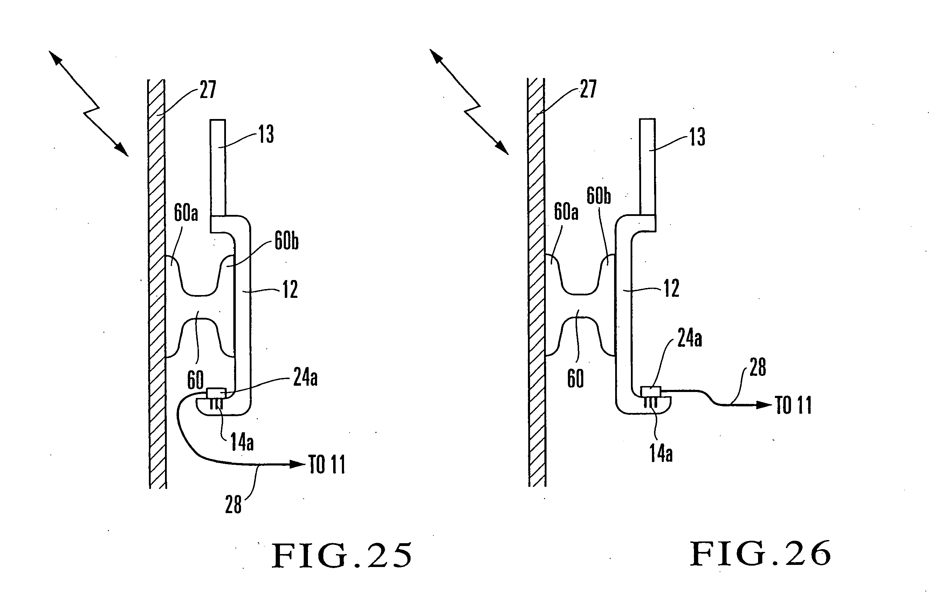

Fig. 25 is a side sectional view showing a fixing method using a double-sided suction cup type fixing unit (fixing member). Referring to Fig. 25, one suction cup 60a of a double-sided suction cup type fixing unit (fixing member) 60 is fixed to the window glass 27 by suction. The other suction cup 60b sucks the inside outer surface of the satellite unit 12 to hold the satellite unit 12.

Fig. 26 shows a case where the suction cup 60b of the double-sided suction cup type fixing unit (fixing member) sucks the outside outer surface of the satellite unit 12 to hold the satellite unit 12. As compared with the above method of fixing the fixing unit 25, the fixing method using the double-sided suction cup type fixing unit (fixing member) in Figs. 25 and 26 is very simple as well as allowing the fixing unit itself to have a very simple, low-cost structure.

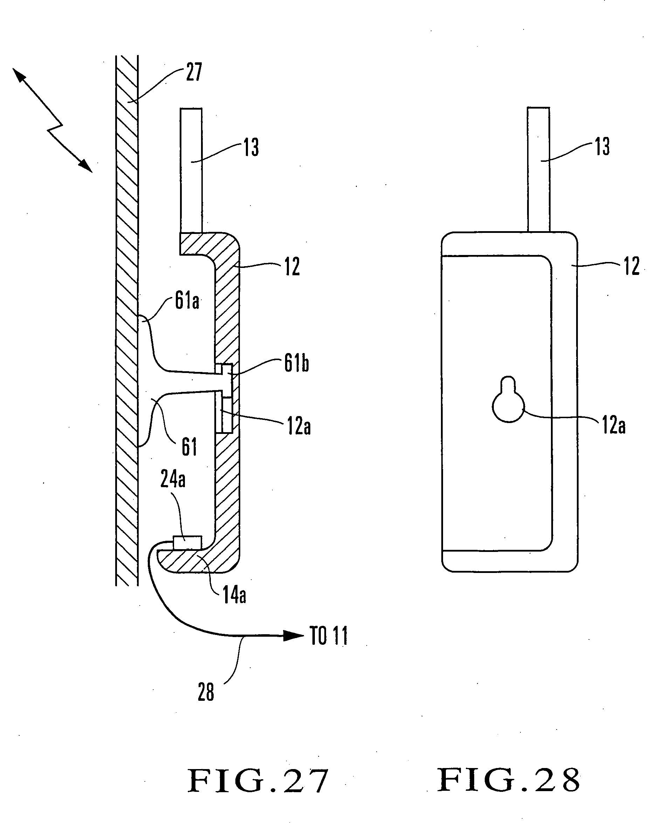

Fig. 27 is a side sectional view showing a fixing method using a suction cup/projection type fixing unit (fixing member). Referring to Fig. 27, a suction cup 61a of a suction cup/projection type fixing unit (fixing member) 61 is fixed to the window glass 27 by suction. When a fitting hole 12a (Fig. 28) formed in the satellite unit 12 is fitted on a projection 61b of the suction cup/projection type fixing unit (fixing member) 61 and the satellite unit 12 is pushed downward, the projection 61b is sufficiently fitted in the fitting hole 12a, thereby fixing/holding the satellite unit 12.

The fixing method using this suction cup/projection type fixing unit (fixing member) is a simple, low-cost fixing method like that shown in Figs. 25 and 26.

As described above, according to the present invention, the following effects can be obtained:
(1) Since the satellite communication portable terminal is attached to the fixing unit fixed to a place where much radio wave transmission troubles do not occur, and communication can be made between the satellite communication portable terminal and the ground cellular terminal separated from the satellite communication portable terminal, the user need not move to the outdoors, near a window, or the like, together with the terminal, in performing communication via a satellite, as in the prior art. This makes it possible to increase the degree of freedom of communication in buildings and vehicles.
(2) The degree of freedom of communication can be increased at a low cost by using the double-sided suction cup type fixing unit (fixing member) or suction cup/projection type fixing unit (fixing member) having a very simple arrangement.
(3) By using the fixing unit or the like, the installation direction of the antenna of the satellite communication portable terminal can always be kept to a predetermined direction, and communication quality can always be kept constant.
(4) By connecting the separated satellite communication portable terminal to the ground cellular terminal via a cable or the like, speech and data signals can be transmitted from the ground cellular terminal to the satellite communication portable terminal.
(5) The separated ground cellular terminal can use a commercially available indoor desk kit or mobile unit kit, and hence the ground cellular terminal can be used as a simple desk-stand telephone or mobile telephone in communication via a satellite.
(6) Since the fixing unit has a cable connection point for connection to the ground cellular terminal and supply of power from an external unit, there is no need to perform cumbersome cable connection in attaching/detaching the satellite communication portable terminal. This facilitates the use of the cellular terminal separation type satellite communication portable terminal.
(7) Since the separated satellite communication portable terminal can be connected to the ground cellular terminal by radio, no cable is required. This increases the degree of freedom indoors.
(8) The radio modules are respectively provided for the ground cellular terminal and the fixing unit for the installation of the satellite communication portable terminal and connected to each other by radio. In addition, the satellite communication portable terminal and fixing unit are electrically connected to each other via the connector. This makes it possible to reduce the load of the satellite communication portable terminal.
(9) Since the versatile Bluetooth scheme is applied to the radio modules, radio connection can be realized with relative ease.
(10) Since the shape of the fixing unit is the same as that of the portion of the ground cellular terminal on which the satellite communication portable terminal is fitted, the satellite communication portable terminal can be easily attached/detached to/from the fixing unit. When the user is to go out, he/she can easily detach the satellite communication portable terminal. When the user comes home, he/she can easily attach the satellite communication portable terminal.
(11) Since the surface of the fixing unit or the like on which the suction cup is mounted or one surface of the double-sided adhesive tape is stuck can be fixed to a window glass or a portion around the window glass, the fixing unit on which the satellite communication portable terminal is fitted can be easily detached from the window glass when the window glass is opened/closed. This can prevent a trouble in opening/closing the window glass.
(12) In a moving object, the fixing unit in the form of a drink holder is hooked in a gap in a window glass housing portion, and hence a trouble in opening/closing the window glass can be prevented without detaching the fixing unit.
(13) A signal change due to a cable loss can be corrected by the buffer circuit provided for the fixing unit, as needed.
(14) When the cable is not used, the cable can be taken up and housed in the cable take-up/housing mechanism provided for the fixing unit. This makes it possible to store away the cable without any entanglement when the cable is not used.
(15) The batteries of the separated satellite communication portable terminal and ground cellular terminal are preferably charged by the charging unit provided for the fixing unit. This can prevent battery depletion during speech communication.

### Industrial Applicability

According to the installation system and method for the cellular terminal separation type satellite communication portable terminal of the present invention, the satellite communication portable terminal is set on the fixing unit fixed to a place where radio wave registration troubles are small, and the ground cellular terminal separated from the satellite communication portable terminal can communicate with the satellite communication portable terminal. Therefore, in performing communication via a satellite, the user need not move to the outdoors, a window, or the like, together with the terminal as in the prior art. This makes it possible increase the degree of freedom in communication in buildings and vehicles.

## Claims

1. A installation system for a cellular terminal separation type satellite communication portable terminal (12) constituted by a ground cellular terminal (11) capable of stand-alone communication and a satellite communication portable terminal (12) which can be separated/fitted from/on said ground cellular terminal (11), **characterized by** comprising:
a fixing unit (25) which is fixed to a fixed object in a place where radio wave transmission troubles are small and holds said separated satellite communication portable terminal (12); and
means for electrically connecting said separated satellite communication portable terminal (12) to said other separated ground cellular terminal (11).

2. An installation system for a cellular terminal separation type satellite communication portable terminal (12) according to claim 1, **characterized in that** said fixing unit (25) has a first suction cup adhering to the fixed object by suction, and a second suction cup adhering to said separated satellite communication portable terminal (12) by suction.

3. An installation system for a cellular terminal separation type satellite communication portable terminal (12) according to claim 1, **characterized in that** said fixing unit (25) is a suction cup/projection structure having a suction cup adhering to the fixed object by suction, and a projection that is fitted in a fitting hole formed in said separated satellite communication portable terminal (12).

4. An installation system for a cellular terminal separation type satellite communication portable terminal (12) according to claim 1, **characterized in that** the fixed object is a window glass (27).

5. An installation system for a cellular terminal separation type satellite communication portable terminal (12) according to claim 1, **characterized in that** the fixed object is a window glass (27).

6. An installation system for a cellular terminal separation type satellite communication portable terminal (12) according to claim 1, **characterized in that** said means is a cable.

7. An installation system for a cellular terminal separation type satellite communication portable terminal (12) according to claim 1, **characterized in that** said means is a radio channel.

8. A installation system for a cellular terminal separation type satellite communication portable terminal (12) constituted by a ground cellular terminal (11) capable of stand-alone communication and a satellite communication portable terminal (12) which can be separated/fitted from/on said ground cellular terminal (11), **characterized by** comprising:
a fixing unit (25) which is fixed to a fixed object in a place where radio wave transmission troubles are small and on which said separated satellite communication portable terminal (12) is installed; and
means for electrically connecting said separated satellite communication portable terminal (12) to said other separated ground cellular terminal (11).

9. An installation system for a cellular terminal separation type satellite communication portable terminal (12) according to claim 8, **characterized in that** the fixed object is a window glass (27).

10. An installation system for a cellular terminal separation type satellite communication portable terminal (12) according to claim 8, **characterized in that** said means is a cable.

11. An installation system for a cellular terminal separation type satellite communication portable terminal (12) according to claim 8, **characterized in that** said means is a radio channel.

12. An installation method for a cellular terminal separation type satellite communication portable terminal (12) constituted by a ground cellular terminal (11) capable of stand-alone communication and a satellite communication portable terminal (12) which can be separated/fitted from/on the ground cellular terminal (11), **characterized by** comprising:
the step of installing the separated satellite communication portable terminal (12) in a place where radio wave transmission troubles are small; and
the step of electrically connecting the separated satellite communication portable terminal (12) to the other separated ground cellular terminal (11).

13. An installation method for a cellular terminal separation type satellite communication portable terminal (12) constituted by a ground cellular terminal (11) capable of stand-alone communication and a satellite communication portable terminal (12) which can be separated/fitted from/on the ground cellular terminal (11), **characterized by** comprising:
the step of fixing the separated satellite communication portable terminal (12) to a window glass (27); and
the step of electrically connecting the separated satellite communication portable terminal (12) to the other separated ground cellular terminal (11).

14. A method of using a cellular terminal separation type satellite communication portable terminal (12) constituted by a ground cellular terminal (11) capable of stand-alone communication and a satellite communication portable terminal (12) which can be separated/fitted from/on the ground cellular terminal (11), **characterized by** comprising:
the step of installing or holding the separated satellite communication portable terminal (12) in a place where radio wave transmission troubles are small; and
the step of electrically connecting the separated satellite communication portable terminal (12) to the other separated ground cellular terminal (11).
